# EUROPÄISCHE PATENTANMELDUNG

(11) **EP 3 960 380 A1**
(43) Veröffentlichungstag der Anmeldung: **02.03.2022**
(21) Anmeldenummer: 20192908.0
(22) Anmeldetag: 26.08.2020
(51) Int. Cl.: B25F 5/00, F16K 37/00, G07C 3/04, F15B 21/02

(54) **ZÄHLVORRICHTUNG FÜR FLUIDBETRIEBENE WERKZEUGE**

(71) Anmelder: Johannes Lübbering GmbH, 33442 Herzebrock-Clarholz (DE)
(72) Erfinder: BERGMANN, Bruno, 33334 Gütersloh (DE); FLASKAMP, Andreas, 33397 Rietberg (DE); LÜBBERING, Achim, 33442 Herzebrock-Clarholz (DE)
(74) Vertreter: Patent- und Rechtsanwälte Behrmann Wagner PartG mbB

(57) **Zusammenfassung**

Die Erfindung betrifft eine Zählvorrichtung (10) für ein fluidbetriebenes Werkzeug (20), aufweisend eine Ventilhülse (1) mit einem darin angeordneten Fluidkanal (2) mit einem Einlass (3a) und einem Auslass (3b) zur Führung von Fluid bei Aktivierung des Werkzeugs (20), eine Zähleinheit (4) zur Erfassung einer Aktivierung des Werkzeugs (20) mit einem stationären Sensorelement (5) und einem mit diesem vorzugsweise magnetisch zusammenwirkenden und in der Ventilhülse (1) relativ zum Sensorelement (5) bewegbar angeordneten Zählelement (6), wobei das Zählelement (6) in einer ersten Position im Ventilgehäuse (1) mittels eines Spannelements (7) vorgespannt ist und ausgebildet ist, sich bei Führung von Fluid im Fluidkanal (2) bei Aktivierung des Werkzeugs (20) in eine zweite Position zu bewegen, eine Steuereinheit (8) zur Überwachung der Zähleinheit (4) insbesondere hinsichtlich einer vordefinierten maximalen Zykluszahl und/oder Aktivierungsdauer des Werkzeugs, wobei die Zählvorrichtung (10) eine relativ zur Ventilhülse (1) vorzugsweise axial bewegliche und durch die Steuereinheit (8) ansteuerbare Absperreinheit (9) aufweist, welche zum positionsabhängigen Zusammenwirken mit der Ventilhülse (1) ausgebildet ist, derart, dass in einer ersten fluidleitenden Offenstellung eine Fluidförderung im Fluidkanal (2) ermöglicht und in einer zweiten fluidsperrenden Stellung eine Fluidförderung im Fluidkanal (2) gesperrt wird.

## Beschreibung

Die vorliegende Erfindung betrifft eine Zählvorrichtung für fluidbetriebene Werkzeuge, insbesondere pneumatisch betriebene Werkzeuge.

Werkzeuge, insbesondere Bohrmaschinen, welche mit einem Fluid wie Druckluft betrieben werden, sind aus dem Stand der Technik bekannt. Diese weisen im Allgemeinen eine insbesondere gegenüber akkubetriebenen Werkzeugen höhere Leistung pro Gewicht auf und können somit leichter und für den Werker handlicher ausgeführt werden. Diese Werkzeuge sind üblicherweise für eine vorgegebene Einsatzdauer, beispielsweise eine vorgegebene Zykluszahl an Betätigungen des Werkzeugs oder eine vorgegebene Gesamtbetriebsdauer ausgelegt. Nach dieser Betriebsdauer oder Zykluszahl hat in der Regel eine Wartung des Werkzeugs zu erfolgen, im Rahmen welcher insbesondere eine erneute Kalibrierung und/oder ein Austausch von Verschleißteilen vorgenommen wird, um eine zuverlässige Weiterverwendung des Werkzeugs innerhalb vordefinierter bzw. vorgegebener Toleranzen zu garantieren.

Nachteilig an den bekannten Werkzeugen ist, dass diese üblicherweise keine Überwachungsmittel aufweisen, welche deren Betrieb oder Einsatzdauer erfassen, so dass der Werker bzw. Benutzer auf externe Überwachung beispielsweise mittels manueller Hilfsmittel angewiesen ist, die jedoch selbst eine nicht unerhebliche Fehlerquelle darstellen.

WO 2016/057375 A1 beschreibt einen Zähler zum Überwachen eines Werkzeugverbrauchs bzw. einer Einsatzzeit für ein fluidgetriebenes Werkzeug, aufweisend einen in einem Fluiddurchgang axial verschiebbaren und in eine erste Position vorgespannten Kolben mit einem daran angeordneten Sensorerfassungselement, wobei sich der Kolben bei Bewegung von Fluid im Fluiddurchgang aus der ersten in eine zweite Position im Fluiddurchgang axial bewegt und wobei an dieser zweiten Position das Sensorerfassungselement durch einen der zweiten Position zugeordneten Sensor erfasst wird, so dass eine Werkzeugbenutzungsermittlung basierend auf der Erfassung an der zweiten Position ermöglicht wird. Bei Überschreitung einer vorgegebenen maximalen Zykluszeit, beispielsweise von mehr als 5 Sekunden, wird eine Warnung an den Benutzer ausgegeben. Nach einer jeweiligen Benutzung kann der Werker den Zähler zurücksetzen, und einen neuen Bearbeitungsschritt bzw. Zyklus beginnen. Ebenfalls kann eine visuelle Warnung bei Erreichung einer vordefinierten Zyklusanzahl bzw. Einsatzzeit ausgegeben werden.

Nachteilig an diesem Stand der Technik ist, dass diese Ausführung eine verlässliche Erfassung der Überschreitung einer kumulierten Einsatzzeit durch den Werker bzw. Benutzer insbesondere im Umfeld einer Montage- oder Fertigungsstraße und bei enger Taktzeit der mittels des Werkzeugs vorzunehmenden Einsätze bzw. zu setzenden Verbindungen nicht garantieren kann und somit ein Risiko einer erhöhten Fehleranfälligkeit bestehen bleibt.

Der vorliegenden Erfindung liegt die Aufgabe zugrunde, die vorgenannten Nachteile des Standes der Technik zu überwinden oder zumindest deutlich abzuschwächen. Diese Aufgabe wird durch den Gegenstand der unabhängigen Ansprüche gelöst. Die Unteransprüche stellen vorteilhafte Weiterbildungen der vorliegenden Erfindung dar. Die Erfindung adressiert zudem weitere Probleme, wie in der folgenden Beschreibung näher erläutert wird.

In einem ersten Aspekt betrifft die vorliegende Erfindung eine Zählvorrichtung für ein fluidbetriebenes, insbesondere pneumatisches oder hydraulisches Werkzeug, aufweisend eine Ventilhülse mit einem darin angeordneten Fluidkanal mit einem Einlass und einem Auslass zur Führung von Fluid bei Aktivierung des Werkzeugs, eine Zähleinheit zur Erfassung einer Aktivierung des Werkzeugs mit einem stationären Sensorelement und einem mit diesem positionsabhängig und vorzugsweise magnetisch zusammenwirkenden und in der Ventilhülse relativ zum Sensorelement bewegbar angeordneten Zählelement, wobei das Zählelement in einer ersten Position im Ventilgehäuse mittels eines Spannelements vorgespannt ist und ausgebildet ist, sich bei Führung von Fluid im Fluidkanal bei Aktivierung des Werkzeugs in eine zweite Position zu bewegen, eine Steuereinheit zur Überwachung der Zähleinheit insbesondere hinsichtlich einer vordefinierten maximalen Zykluszahl und/oder Aktivierungsdauer, wobei die Zählvorrichtung eine relativ zur Ventilhülse vorzugsweise axial bewegliche und durch die Steuereinheit ansteuerbare Absperreinheit aufweist, welche zum positionsabhängigen Zusammenwirken mit der Ventilhülse ausgebildet ist, derart, dass in einer ersten fluidleitenden Offenstellung der Absperreinheit eine Fluidförderung im Fluidkanal der Ventilhülse ermöglicht und in einer zweiten fluidsperrenden Stellung der Absperreinheit eine Fluidförderung im Fluidkanal der Ventilhülse gesperrt bzw. unterbrochen wird.

Die erfindungsgemäße Zählvorrichtung ermöglicht eine einfache und zuverlässige Erfassung bei Aktivierung des mit der Zählvorrichtung verbundenen fluidgetriebenen Werkzeugs, wie beispielsweise einer pneumatisch oder auch hydraulisch betriebenen Bohrmaschine. Die Absperreinheit ermöglicht hierbei durch die Bereitstellung der Sperrstellung bei entsprechender Ansteuerung durch die Steuereinheit, in welcher eine Fluidführung im Fluidkanal der Zählvorrichtung und somit eine Förderung von jeglichem Fluid hin zum Werkzeug gesperrt bzw. unterbrochen wird, eine sichere Rückmeldung an den Werker, dass ein Weiterbetrieb des Werkzeugs, insbesondere aufgrund der Erreichung einer maximale Zykluszahl und/oder Aktivierungs- bzw. Betriebsdauer unterbleiben soll. Eine Weiterverwendung bzw. weitere Aktivierung des Werkzeugs selbst für einige wenige Einsätze bzw. Verschraubungen kann somit sicher verhindert werden. Hierdurch wird eine deutlich verbesserte Qualitätssicherung im Fertigungsprozess ermöglicht. Durch die axial bewegliche Ausführung der Absperreinheit wird zudem eine konstruktiv einfache, sehr effiziente und besonders platzsparende Anordnung der Absperreinheit in der Zählvorrichtung bereitgestellt.

Unter "axial beweglich" wird vorliegend eine entlang der Fluidkanallängsrichtung bewegliche Anordnung der Absperreinheit verstanden. Die Absperreinheit ist hierbei ausgebildet, sich bei Ansteuerung durch die Steuereinheit, insbesondere bei Erreichung einer vordefinierten maximalen Zykluszahl und/oder Aktivierungsdauer des Werkzeugs, von der ersten fluidleitenden Offenstellung axial relativ zur Ventilhülse in die zweite Stellung zur Absperrung der Fluidführung im Fluidkanal zu bewegen.

Unter "in der ersten Position vorgespannt" wird verstanden, dass das Zählelement im nicht fluiddruckbeaufschlagten Zustand, d.h. wenn keine Fluidförderung im Fluidkanal erfolgt, durch das zugeordnete Spannelement in der ersten Position gehalten wird. Bei Fluidförderung im Fluidkanal erfolgt eine Druckbeaufschlagung des Zählelements gegen die Vorspannungskraft, wobei bei Überschreitung einer Mindestfördermenge, insbesondere bei Überschreitung einer durch das Spannelement vorgegebenen Vorspannungskraft durch den Fluiddruck, eine Bewegung des Zählelements in die zweite Position erfolgt. Bei Deaktivierung des Werkzeugs wird die Fluidförderung durch den Fluidkanal gestoppt und es erfolgt eine Rückführung des Zählelements durch das Spannelement bzw. die dadurch anliegende Vorspannungskraft in die erste Position.

Die Ventilhülse ist vorzugsweise als hohlzylindrische Hülse ausgebildet, in welcher der Fluidkanal im Wesentlichen zentral zwischen dem Einlass und dem Auslass der Hülse verläuft bzw. angeordnet ist. Die Ventilhülse ist vorzugsweise positionssicher, d.h. unbeweglich in einem Gehäuse der Vorrichtung angeordnet. Ein Einlass der Ventilhülse ist fluidtechnisch mit einem Zufluss bzw. einer Fluidversorgung für das Werkzeug verbindbar bzw. verbunden. Der Auslass ist mit dem Werkzeug direkt oder einer diesem zuführenden Fluidleitung verbindbar bzw. verbunden. Die Zählvorrichtung ist somit in einer Fluidversorgungsleitung zum Werkzeug zwischengeschaltet angeordnet. Die Vorrichtung kann hierfür integrierte Verbindungsmittel wie beispielsweise Schraub- oder Steckverbinder aufweisen, welche zur entsprechenden Verbindung mit einer Fluidversorgungsleitung bzw. dem Werkzeug ausgebildet sind. Die Zählvorrichtung kann hierbei als eigenständige und mit dem Werkzeug selektiv verbindbare Vorrichtung ausgebildet sein, oder als im Werkzeug integrierte Vorrichtung ausgebildet sein.

Die Absperreinheit ist vorzugsweise derart ausgebildet bzw. in der Vorrichtung angeordnet, dass ein ungewollter Positionswechsel von der Offenstellung in die Sperrstellung oder umgekehrt, insbesondere während des normalen Betriebs der Vorrichtung und/oder ohne Ansteuerung durch die Steuereinheit, verhindert wird. Dies kann beispielsweise durch Vorsehen einer geeigneten Passung der Absperreinheit auf einer Mantelfläche der Ventilhülse und/oder durch Zuordnung entsprechender Dichtungselemente, beispielsweise O-Ringe, erzielt werden, welche die Absperreinheit in der entsprechenden Position relativ zur Ventilhülse insbesondere durch Haftreibung halten. In einer bevorzugten Ausführungsform weist die Absperreinheit einen axial verschiebbaren Sperrschieber auf, welcher eine Mantelfläche der Ventilhülse wenigstens teilweise umschließend ausgebildet ist und mit zur Mantelfläche hin geöffneten Fluidabschnitten der Ventilhülse zusammenwirkend ausgebildet ist, derart, dass in der ersten Offenstellung die Fluidabschnitte der Ventilhülse miteinander fluidleitend verbunden sind und in der zweiten Sperrstellung unterbrochen sind.

Der Sperrschieber ist vorteilhafterweise als hohlzylindrisches Bauteil ausgebildet, welches auf einer Mantelfläche der Ventilhülse axial verschiebbar gelagert ist, wobei je nach Relativposition die Offenstellung oder Sperrstellung der Absperreinheit eingenommen bzw. bereitgestellt wird. Der Sperrschieber weist vorteilhafterweise auf einer Innenmantelfläche wenigstens eine fluidleitende Ausnehmung oder einen Rücksprung auf, welche bzw. welcher in der ersten Offenstellung die Fluidabschnitte der Ventilhülse miteinander verbindet. Die Ausnehmung kann beispielsweise ein in der Innenmantelfläche geformter radialer Rücksprung sein, welcher sich vorzugsweise wenigstens teilweise, mehr bevorzugt über den gesamten Innenumfang erstreckt. Die Innenmantelfläche ist vorzugsweise ausgebildet, in der zweiten Sperrstellung die Fluidabschnitte der Ventilhülse zu unterbrechen. Hierbei ist ein Innendurchmesser vorzugsweise auf einen Außendurchmesser der Ventilhülse derart abgestimmt, dass in der Sperrstellung die Innenmantelfläche Öffnungen der Fluidabschnitte in der Mantelfläche der Ventilhülse fluiddichtend überdeckt.

In einer bevorzugten Ausführungsform weist die Ventilhülse einen im Fluidkanal angeordneten, insbesondere zwischen dem Einlass und Auslass angeordneten, stationären Verteilabschnitt mit wenigstens zwei, vorzugsweise einer Mehrzahl von darin über eine Mantelfläche geführten Fluidabschnitten auf. Unter "über die Mantelfläche geführt" wird vorliegend verstanden, dass die Fluidkommunikation in den bzw. zwischen den jeweiligen Fluidabschnitten wenigstens teilweise über die Mantelfläche der Ventilhülse erfolgt.

Die jeweiligen Fluidabschnitte kommunizieren mit einem jeweils zugeordneten Einlassfluidkanalabschnitt und einem Auslassfluidkanalabschnitt des Fluidkanals bzw. sind zwischen den vorgenannten Abschnitten des Fluidkanals angeordnet. Der Einlass- und Auslassfluidkanalabschnitt bilden jeweils einen vorzugweise zentral in der Ventilhülse angeordneten Abschnitt des Fluidkanals. Der Verteilabschnitt der Ventilhülse stellt eine Verzweigung des Fluidkanals der Ventilhülse in wenigstens zwei, bevorzugt eine Mehrzahl von Fluidabschnitten bereit, welche jeweils vom Einlassfluidkanalabschnitt über die Mantelfläche der Ventilhülse zum Auslassfluidkanalabschnitt fluidleitend ausgebildet bzw. angeordnet sind.

Die Ventilhülse weist vorzugsweise wenigstens zwei Fluidabschnitte, mehr bevorzugt wenigstens drei und weiterhin bevorzugt eine Vielzahl von über die Mantelfläche geführte Fluidabschnitte auf, welche bevorzugt gleichmäßig umfangsverteit in der Ventilhülse, insbesondere in einem im Fluidkanal positionierten Verteilabschnitt der Ventilhülse, angeordnet sind.

Die jeweiligen Fluidabschnitte der Ventilhülse weisen bevorzugt jeweils einen ersten von dem Einlassfluidkanalabschnitt zur Mantelfläche der Ventilhülse führenden Fluidteilabschnitt und einen zweiten, von der Mantelfläche der Ventilhülse in den Auslassfluidkanalabschnitt führenden Fluidteilabschnitt auf. Die jeweiligen Fluidteilabschnitte sind vorzugsweise wenigstens teilweise radial verlaufend in der Ventilhülse angeordnet. Dies bedeutet, dass die Fluidteilabschnitte wenigstens teilweise, vorzugsweise mit einem konstanten Neigungswinkel geneigt von dem jeweils zugeordneten Einlass- bzw. Auslassfluidkanalabschnitt hin zur Mantelfläche der Ventilhülse verlaufen. Ein vorteilhafter Neigungswinkel liegt hierbei zwischen 15° und 75°, mehr bevorzugt zwischen 30° und 60° relativ zur Längsachse bzw. Längsrichtung des Fluidkanals. Die einzelnen Fluidteilabschnitte weisen vorzugsweise einen konstanten Durchmesser in Verlaufsrichtung auf. Der jeweils erste und zweite Fluidteilabschnitt sind vorteilhafterweise in Fluidkanallängsrichtung voneinander beabstandet bzw. getrennt, derart, dass zwischen den jeweiligen Öffnungen der Fluidteilabschnitte, welche in der Mantelfläche der Ventilhülse ausgebildet sind, eine vorzugsweise kontinuierliche, d.h. zusammenhängende Außenumfangsfläche der Ventilhülse angeordnet ist. Über diese zwischengelagerte Außenumfangsfläche der Ventilhülse kann in der Offenstellung der Sperreinheit eine Fluidkommunikation zwischen den jeweiligen Fluidteilabschnitten erfolgen.

Die Absperreinheit weist vorzugsweise ein durch den Einlass des Fluidkanals mit Fluid gespeistes und mit der Steuereinheit verbundenes Ventil, vorzugsweise ein 3/2-Wegeventil, auf, welches mit der Steuereinheit verbunden ist. Das Ventil ist vorzugsweise ausgebildet, bei Ansteuerung durch die Steuereinheit den Sperrschieber der Absperreinheit von der ersten Offenstellung in die zweite fluidsperrende Stellung bzw. Sperrstellung zu bewegen. Durch die Beaufschlagung mit Fluid, insbesondere Druckluft, wird eine die Absperreinheit in der jeweiligen Position haltende Haftreibung überwunden. In einer weiteren bevorzugten Ausführungsform ist das Ventil zusätzlich ausgebildet, durch entsprechende Ansteuerung durch die Steuereinheit den Sperrschieber der Absperreinheit von der zweiten Sperrstellung in die erste Offenstellung zu bewegen.

Die Absperreinheit ist weiterhin bevorzugt ausgebildet, dass ein Zurücksetzen des Sperrschiebers von der zweiten Sperrstellung in die erste Offenstellung manuell erfolgen kann. Hierfür kann die Absperreinheit einen separaten Fluideinlass, insbesondere für Druckluft, aufweisen, welcher zur Einleitung von Fluid in einen Rückstellfluidkanal und somit zur Druckbeaufschlagung des Sperrschiebers derart ausgebildet ist, dass dieser in seine Offenstellung zurückbewegt bzw. zurückgesetzt werden kann. Alternativ oder zusätzlich kann die Absperreinheit einen manuell bedienbaren Hebel oder dergleichen aufweisen, der mit dem Sperrschieber verbunden ist und welcher ein Zurücksetzen des Sperrschiebers in die erste Offenstellung ermöglicht. Der Sperrschieber verbleibt dann zunächst wieder weiterhin in der ersten Offenstellung, bis mittels der Steuereinheit eine Aktivierung der Absperreinheit bzw. eine Bewegung des Sperrschiebers von der ersten Offenstellung in die zweite Sperrstellung ausgelöst wird.

Die Absperreinheit ist vorzugsweise separat zur Zähleinheit und somit nicht zusammenhängend mit der Zähleinheit ausgebildet oder angeordnet. Die Absperreinheit ist vorzugsweise stromaufwärts der Zähleinheit bezogen auf den Fluidkanal angeordnet. Die Absperreinheit ist somit vorzugsweise dem Einlass des Fluidkanals und die Zähleinheit dem Auslass des Fluidkanals zugeordnet.

In einer bevorzugten Ausführungsform weist das Zählelement einen Zählkolben auf, welcher in Längsrichtung des Fluidkanals axial beweglich in der Ventilhülse gelagert ist. Der Zählkolben ist hierbei in einem dafür vorgesehen Lagerabschnitt der Ventilhülse axial beweglich angeordnet. Der Zählkolben stellt somit einen Widerstand für das im Fluidkanal geförderte bzw. das den Kanal durchströmende Fluid dar, so dass bei Aktivierung des Werkzeugs eine Druckbeaufschlagung auf den Zählkolben erfolgt, welche diesen entgegen der angelegten Vorspannkraft in die zweite Position bewegt. In einer bevorzugten Ausführungsform weist der Zählkolben wenigstens eine in Längsrichtung verlaufende Ausnehmung, insbesondere eine Längsnut auf, welche in der ersten Position beispielsweise von einem Durchmesserrücksprung der Ventilhülse fluiddichtend vom Fluidkanal getrennt ist und in der zweiten Position aufgrund der Axialverschiebung in der Ventilhülse mit dem Fluidkanal fluidleitend kommunizieren kann. Das Spannelement zur Vorspannung des Zählkolbens kann beispielsweise eine Zugfeder sein.

In einer alternativen Ausführungsform umfasst das Zählelement einen zur Längsrichtung des Fluidkanals rotierbaren Drehschalter. Dieser ist in der Ventilhülse rotierbar gelagert bzw. angeordnet. Die Bereitstellung eines erfindungsgemäßen Drehschalters hat den Vorteil einer deutlich verbesserten Wartungsfreundlichkeit. Insbesondere werden durch die Rotationsbewegung zusätzliche Kräfte auf etwaige, sich mit der Zeit im Fluidkanalbereich der Zähleinheit ansammelnde Schmutzpartikel mit einer von der Fluiddurchflussrichtung abweichenden Kraftkomponente beaufschlagt. Hierdurch erfolgt eine optimierte Ablösung derartiger, sich mit der Zeit im Fluidkanalbereich der Zähleinheit ansammelnder Schmutzpartikeln. Zusätzlich wird der notwendige Bauraum bzw. die Abmessungen der Vorrichtung weiter reduziert, da bei dem erfindungsgemäßen Drehschalter keine Bewegung in Längsrichtung des Fluidkanals erfolgt bzw. notwendig ist.

Ein weiterer Aspekt der Erfindung betrifft eine Zählvorrichtung für ein fluidbetriebenes Werkzeug, aufweisend eine Ventilhülse mit einem darin angeordneten Fluidkanal mit einem Einlass und einem Auslass zur Führung von Fluid bei Aktivierung des Werkzeugs, eine Zähleinheit zur Erfassung einer Aktivierung des Werkzeugs mit einem stationären Sensorelement und einem mit diesem positionsabhängig und vorzugsweise magnetisch zusammenwirkenden und in der Ventilhülse relativ zum Sensorelement bewegbar angeordneten Zählelement, wobei das Zählelement in einer ersten Position im Ventilgehäuse mittels eines Spannelements vorgespannt ist und ausgebildet ist, sich bei Führung von Fluid im Fluidkanal bei Aktivierung des Werkzeugs in eine zweite Position zu bewegen, eine Steuereinheit zur Überwachung der Zähleinheit insbesondere hinsichtlich einer vordefinierten maximalen Zykluszahl und/oder Aktivierungsdauer des Werkzeugs, wobei das Zählelement einen zur Längsrichtung des Fluidkanals rotierbaren Drehschalter umfasst oder durch diesen gebildet ist.

In einer bevorzugten Ausführungsform ist der Drehschalter koaxial zur Ventilhülse rotierbar gelagert. Weiterhin bevorzugt ist der Drehschalter vorzugsweise um einen vordefinierten Winkel drehbar angeordnet. Dies bedeutet, dass der Drehschalter sich lediglich um einen vordefinierten Winkel, vorteilhafterweise um 90° bis 180° bei Druckbeaufschlagung durch Fluidförderung im Fluidkanal drehen kann. Hierbei kann der Drehschalter beispielsweise eine teilweise um den Umfang verlaufende Nut in dessen Mantelfläche aufweisen, mit welcher ein damit zusammenwirkender Vorsprung der Ventilhülse und/oder ein daran angeordnetes Positionselement in Eingriff steht.

Der Drehschalter weist vorzugsweise einen in der Ventilhülse rotierbar gelagerten Hohlzylinder mit wenigstens einem dadurch verlaufenden fluidführenden Kanal auf, wobei an einer Innenumfangsfläche des Drehschalters ein Umlenkelement angeordnet ist, welches ausgebildet ist, eine durch Fluidführung bei Aktivierung des Werkzeugs in Richtung der Rotationsachse des Drehschalters bereitgestellte axiale Druckbeaufschlagung wenigstens teilweise in eine Rotationsbewegung und insbesondere in eine vorgegebene Rotationsrichtung des Drehschalters umzusetzen bzw. eine derartige Rotationsbewegung des Drehschalters zu bewirken. Das Umlenkelement steht vorzugsweise von der Innenumfangsfläche in den fluidführenden Kanal des Drehschalters hervor und kann besonders bevorzugt eine Schaufelradausbildung bzw. -geometrie aufweisen. Alternativ kann das Umlenkelement an einer axial und zentral durch den Drehschalter verlaufenden Seele angeordnet sein, und sich von dieser aus radial nach Außen erstrecken.

Der Drehschalter stellt somit einen Widerstand für das im Fluidkanal geförderte bzw. das den Kanal durchströmende Fluid dar, so dass bei Aktivierung des Werkzeugs eine Druckbeaufschlagung auf den Drehschalter, insbesondere auf das Umlenkelement des Drehschalters erfolgt. Bei Anliegen einer vordefinierten Mindestfördermenge und somit bei Kraftbeaufschlagung des Umlenkelements mit einem vordefinierten Fluiddruck, erfolgt eine Rotationsbewegung durch die Schaufelradausbildung hin zur zweiten Position des Drehschalters. Bei Einstellung der Fluidförderung bspw. bei Deaktivierung des Werkzeugs erfolgt eine Rückführung des Drehschalters in die erste Position durch die Vorspannung des Spannelements. Hierbei ist das Spannelement vorzugsweise in Längsrichtung, d.h. koaxial zur Rotationsachse des Drehschalters, zur Erzeugung einer Vorspannkraft rotiert angeordnet. Das Spannelement kann beispielsweise eine durch Rotation um die Längsachse vorgespannte Zugfeder sein.

In einer weiteren alternativen Ausführungsform umfasst das Zählelement einen vorzugsweise senkrecht zur Längsrichtung des Fluidkanals kippbaren Klappschalter. Dieser umfasst vorteilhafterweise eine Klappe, welche um eine senkrecht zur Längsrichtung des Fluidkanals angeordnete Drehachse kipp- bzw. klappbar ist. Der Klappschalter schließt in der ersten vorgespannten Position vorzugsweise den Fluidkanal und stellt somit einen Widerstand für das im Fluidkanal geförderte bzw. das den Kanal durchströmende Fluid dar, so dass bei Aktivierung des Werkzeugs eine Druckbeaufschlagung auf den Klappschalter erfolgt, welche diesen entgegen der angelegten Vorspannkraft in die zweite Position bewegt bzw. aufklappt.

Das Zählelement weist vorzugsweise ein magnetisch detektierbares Sensorerfassungsobjekt auf, welches mit dem stationären Sensorelement der Zähleinheit wenigstens in einer Position des Zählelements zusammenwirkt. Das Sensorerfassungsobjekt ist vorzugsweise ein metallisches und/oder magnetisch detektierbares Objekt, vorzugsweise aus ferromagnetischem Material, beispielsweise ein Permanentmagnet, welches von dem stationären Sensorelement der Vorrichtung in einer Position des Zählelements detektiert bzw. erfasst werden kann. Das stationäre Sensorelement umfasst vorzugsweise wenigstens einen Hall-Sensor, welcher derart bezüglich des Zählelements angeordnet ist, dass dieser wenigstens in einer Position und vorzugsweise in lediglich einer Position der ersten und zweiten Position des Zählelements das Sensorerfassungsobjekt detektiert.

In einer bevorzugten Ausführungsform ist das Sensorerfassungsobjekt derart an dem Zählelement angeordnet, dass dieses in der ersten vorgespannten Position des Zählelements durch das Sensorelement detektierbar ist und in der zweiten fluidbeaufschlagten Position des Zählelements nicht detektierbar ist. In anderen Worten ist das Sensorerfassungsobjekt in der ersten vorgespannten Position innerhalb und in der zweiten Position außerhalb eines Detektions- bzw. Erfassungsbereichs des Sensorelements angeordnet. Hierdurch wird das Sensorerfassungsobjekt bei Nichtaktivierung des Werkzeugs erfasst und bei Aktivierung des Werkzeugs und für die Dauer der Aktivierung nicht mehr erfasst. Das Sensorelement bzw. die Steuereinheit ist hierbei vorzugsweise ausgebildet, eine Aktivierungsdauer bzw. Betriebsdauer und/oder Zykluszahl des Werkzeugs basierend auf dem nichtdetektierten Zustand bzw. der nichtdetektierten Position des Sensorerfassungsobjekts zu ermitteln und/oder überwachen. Eine derartige Ausführungsform ermöglicht eine sichere Überwachung unter Failsafe-Aspekten. Insbesondere kann bei einem ungewöhnlichen bzw. einer Werkzeugaktivierung nicht zuordenbaren Signalausfall eine Fehlfunktion der Zähleinheit sehr frühzeitig erfasst bzw. ermittelt werden, wodurch die Qualitätssicherung im Fertigungsprozess weiter optimiert wird. Die Steuereinheit kann hierbei vorzugsweise zur Erfassung eines über einen vordefinierten zeitlichen Schwellenwert hinausgehenden Signalausfalls, wie beispielsweise über eine oder mehrere Minuten, ausgebildet sein. Die Steuereinheit kann ferner ausgebildet sein, bei Erkennung eines derartigen Signalausfalls die Absperreinheit in die zweite fluidsperrende Stellung zu bewegen. Hierdurch kann eine sichere Rückmeldung einer Fehlfunktion an den Werker erzielt und eine Weiterverwendung einer möglicherweise fehlerhaften Vorrichtung vermieden werden.

In einer alternativen Ausführungsform ist das Sensorerfassungsobjekt derart an dem Zählelement angeordnet, dass dieses in der ersten vorgespannten Position des Zählelements durch das Sensorelement nicht detektierbar ist und in der zweiten fluidbeaufschlagten Position des Zählelements detektierbar ist. In anderen Worten ist das Sensorerfassungsobjekt in der ersten vorgespannten Position außerhalb und in der zweiten Position innerhalb eines Detektions- bzw. Erfassungsbereichs des Sensorelements angeordnet.

Die Steuereinheit ist vorzugsweise derart ausgebildet, dass sie eine Nutzung des Werkzeugs auf Basis der durch die Zähleinheit erfassten kumulierten Zykluszahl und/oder der kumulierten Aktivierungs- bzw. Betriebsdauer des Werkzeugs bestimmt und bei Erreichung eines jeweils vordefinierten Maximalwerts die Absperreinheit aktiviert. Die Steuereinheit ist vorzugsweise ferner ausgebildet, dass sie eine Aktivierung des Werkzeugs bis zu einem vordefinierten minimalen, vorzugsweise zeitlichen, Schwellenwert nicht für die Bestimmung der Werkzeugnutzung berücksichtigt. Hierbei kann der Schwellenwert beispielsweise eine Aktivierung des Werkzeugs von weniger als zwei, mehr bevorzugt weniger als einer Sekunde sein. Eine derartige Aktivierung wird damit nicht als Zyklus und/oder für die kumulierte Aktivierungsdauer des Werkzeugs erfasst. Dadurch wird insbesondere ein kurzes Testen der Funktionalität des Werkzeugs durch den Werker nicht für die Nutzung des Werkzeugs mitberücksichtigt, wodurch die Genauigkeit weiter erhöht wird.

Die Steuereinheit ist vorzugsweise zum elektronischen Zusammenwirken mit der Zähleinheit ausgebildet. Hierbei kann die Zähleinheit einen Mikrokontroller umfassen, welcher ein jeweiliges Signal für eine Erfassung bzw. Nichterfassung des Sensorerfassungsobjekts in der jeweiligen Position des Zählelements an die Steuereinheit übermittelt.

Die Steuereinheit umfasst vorzugsweise eine Kommunikationsschnittstelle oder ist mit einer Kommunikationsschnittstelle der Vorrichtung verbunden, welche insbesondere zur drahtlosen Signalübertragung ausgebildet ist. Die Kommunikationsschnittstelle ist vorzugsweise zur Signal- oder Datenübertragung mittels Bluetooth oder WLAN ausgebildet. Beispielsweise kann mittels der Kommunikationsschnittstelle an die Steuereinheit eine maximale Zykluszahl und/oder Aktivierungsdauer des zugeordneten Werkzeugs übertragen werden. Für die Hinterlegung der bereitgestellten bzw. übertragenen Daten weist die Steuereinheit vorzugsweise einen Datenspeicher, bevorzugt einen nicht-flüchtigen Datenspeicher, auf. Die Kommunikationsschnittstelle kann weiterhin zur vorzugsweise bi-direktionalen Datenübertragung an einen externen Rechner oder eine Datenbank ausgebildet sein. Hierdurch können von der Steuereinheit erfasste bzw. überwachte Parameter an einen externen Rechner- oder eine Datenbank insbesondere zu Qualitätssicherungszwecken oder Datenarchivierung übermittelt werden.

In einer bevorzugten Ausführungsform weist die Zählvorrichtung eine Ortungseinheit auf, welche zum Zusammenwirken mit einem externen Ortungssystem zur Positions- und/oder Lageerfassung der Ortungseinheit und somit der Vorrichtung ausgebildet ist und wobei die Steuereinheit ausgebildet ist, in Abhängigkeit einer erfassten Position und/oder Lage die Absperreinheit zur Einnahme ihrer Offenstellung oder Sperrstellung anzusteuern. Die Ortungseinheit umfasst vorzugsweise eine an der Vorrichtung anbringbare Sender- und/oder Empfängereinheit, welche mittels zugehöriger Sender- und/oder Empfängereinheiten an einem zu bearbeitenden Bauteil oder an einer Aufspannung eines zu bearbeitenden Bauteils, welche sich in einer bekannten Position gegenüber dem Bauteil befindet, eine Positions- und/oder Lageerfassung der Vorrichtung ermöglicht. Derartige Positions- und/oder Lagererfassungssysteme sind aus dem Stand der Technik bekannt und können beispielsweise basierend auf Ultraschall (siehe DE 10 2010034 151 A1 oder DE 20 2012 010 638 U1), optisch und/oder mittels Indoor-GPS eine Positionsbestimmung der Vorrichtung und somit des zugeordneten Werkzeugs durchführen. Die Absperreinheit kann somit positions- und/oder lageabhängig sowie selektiv geöffnet oder geschlossen werden, je nachdem, ob sich die Vorrichtung innerhalb eines für die Bearbeitung vorgesehenen bzw. vordefinierten Raumabschnitts oder einer Wirkposition an einem zu bearbeitenden Werkstück befindet oder nicht. Die hierfür notwendigen Positions- und/oder Lagedaten, an welchen eine Bearbeitung bzw. Aktivierung des Werkzeugs freigegeben ist oder gesperrt ist, kann durch einen mit der Vorrichtung über die Kommunikationsschnittstelle verbundene Rechner oder eine Datenbank bereitgestellt werden.

Weiterhin kann die Zählvorrichtung zusätzliche Sensoren zur Überwachung des damit verbundenen Werkzeugs aufweisen, insbesondere einen Temperatursensor und/oder ein Gyroskop zur Vibrationserfassung. Diese sind vorteilhafterweise mit der Steuereinheit verbunden, wobei die Steuereinheit ausgebildet sein kann, die durch die Sensoren bereitgestellten Signale hinsichtlich der Einhaltung vordefinierter Grenzwerte zu überwachen. Die Steuereinheit kann ausgebildet sein, bei Überschreitung eines vordefinierten Grenzwerts die Absperreinheit von ihrer Offenstellung in die Sperrstellung zu bewegen. Hierdurch kann mittels der Steuereinheit eine zusätzliche Echtzeitüberwachung des Arbeitsprozesses vorgenommen werden, wobei eine selektive Sperrung des Werkzeugs bei Überschreitung vordefinierter Grenzwerte ermöglicht wird.

Die Vorrichtung weist vorzugsweise eine eigene interne Spannungsversorgung, insbesondere in der Form einer bevorzugt wechselbaren Batterie auf. Die Vorrichtung kann ferner eine visuelle Schnittstelle, beispielsweise ein Display, und/oder eine Audioschnittstelle, beispielsweise einen Lautsprecher, aufweisen. Diese sind vorzugsweise mit der Steuereinheit verbunden und können zur Signalausgabe an einen Benutzer verwendet werden.

In einem weiteren Aspekt betrifft die Erfindung ein fluidbetriebenes insbesondere pneumatisches Werkzeug aufweisend eine Zählvorrichtung wie vorgehend beschrieben. Das Werkzeug kann beispielsweise ein fluidbetriebener Schraubendreher, eine Ratsche, ein Schlagschrauber, eine Bohrmaschinen, eine Schleifmaschine oder eine Nagelpistole sein. In einer besonders bevorzugten Ausführungsform ist das Werkzeug eine pneumatisch betriebene Bohrmaschine.

Das Werkzeug weist vorzugsweise einen Versorgungsfluidanschluss auf, welcher direkt mit der Zählvorrichtung, insbesondere mit einem Auslass der Vorrichtung verbunden oder verbindbar ist. Dem Werkzeug zugeführtes Fluid zum Betrieb des Werkzeugs wird daher zunächst über die stromaufwärts angeordnete Zählvorrichtung geführt. Die Zählvorrichtung kann in das Werkzeug integriert sein oder separat dazu ausgeführt sein. Hierbei kann die Zählvorrichtung mit einem spezifischen Verbindungsadapter mit dem Werkzeug verbunden oder verbindbar sein. Zur Vermeidung von Wiederholungen wird auf die obige Beschreibung zur erfindungsgemäßen Zählvorrichtung Bezug genommen, wobei die diesbezüglich offenbarten Merkmale als ebenso für das erfindungsgemäße Werkzeug offenbart und beanspruchbar sein sollen und umgekehrt.

In einem weiteren Aspekt betrifft die Erfindung die Verwendung der Zählvorrichtung wie vorgehend beschrieben zur Überwachung eines fluidbetriebenen Werkzeugs und selektiven Sperrung oder Freigabe einer Fluidzufuhr zum Werkzeug, insbesondere bei Erreichung einer vordefinierten maximalen Zykluszahl und/oder Aktivierungsdauer. Zur Vermeidung von Wiederholungen wird auf die obige Beschreibung zur erfindungsgemäßen Zählvorrichtung Bezug genommen, wobei die diesbezüglich offenbarten Merkmale als ebenso für die erfindungsgemäße Verwendung offenbart und beanspruchbar sein sollen und umgekehrt.

Weitere Vorteile, Merkmale und Einzelheiten der Erfindung ergeben sich aus der nachfolgenden Beschreibung eines bevorzugten Ausführungsbeispiels sowie anhand der Figuren. Diese zeigen in:
- **Fig. 1**: eine schematische Ansicht einer erfindungsgemäßen Zählvorrichtung für ein Werkzeug;
- **Fig. 2a-c**: eine seitliche Schnittansicht einer bevorzugten Ausführungsform einer erfindungsgemäßen Zählvorrichtung mit einem axial verschiebbaren Zählelement;
- **Fig. 3a-3c**: eine seitliche Schnittansicht einer bevorzugten Ausführungsform einer erfindungsgemäßen Zählvorrichtung mit einem drehbaren Zählelement;
- Fig. 4a-4c: eine seitliche Schnittansicht einer bevorzugten Ausführungsform einer erfindungsgemäßen Zählvorrichtung mit einem Klappschalter;
- **Fig. 5a,5b**: eine Draufsicht und eine entsprechende Teilschnittansicht einer bevorzugten Ausführungsform einer Ventilhülse der erfindungsgemäßen Zählvorrichtung;
- **Fig. 6a,6b**: eine perspektivische Seitenansicht und eine entsprechende Teilschnittansicht einer bevorzugten Ausführungsform eines drehbaren Zählelements der Vorrichtung; und
- **Fig. 7**: eine perspektivische Ansicht einer bevorzugten Ausführungsform der erfindungsgemäßen Zähleinheit mit zugeordneter Ortungseinheit.

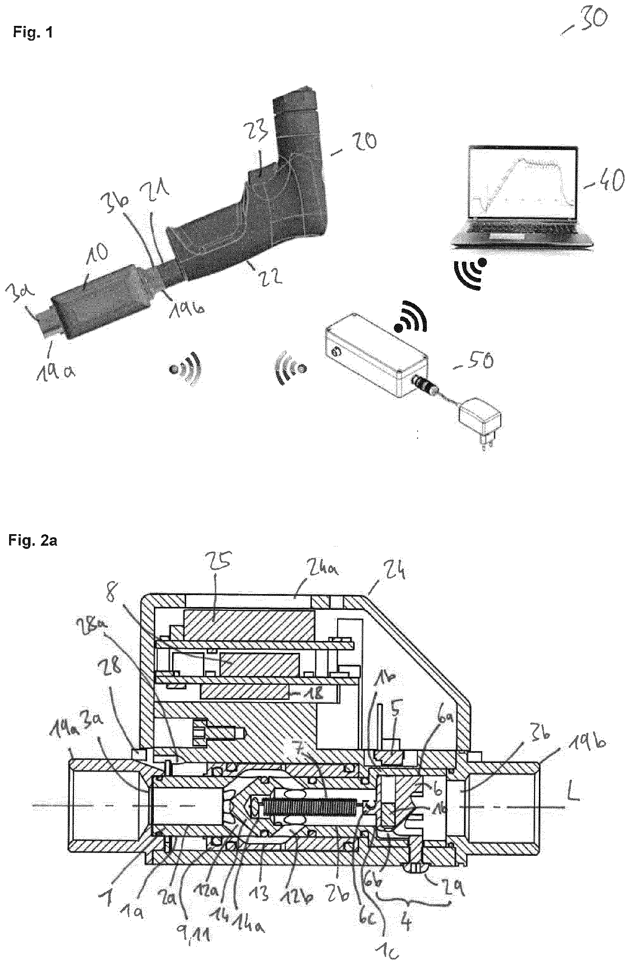

**Fig. 1** zeigt eine schematische Ansicht einer erfindungsgemäßen Zählvorrichtung 10 für ein fluidbetriebenes Werkzeug 20 eines erfindungsgemäßen Systems 30. Ein Einlass 3a der Zählvorrichtung ist mit einer Fluidversorgung für das Werkzeug, vorzugsweise einer Druckluftquelle (nicht gezeigt), verbindbar bzw. verbunden. Ein Auslass 3b der Zählvorrichtung 10 ist direkt mit dem Werkzeug 20, insbesondere mit einem Fluidzufuhranschluss 21 des Werkzeugs 20 verbunden. Dieser ist vorteilhafterweise in oder an einem Griff 22 des Werkzeugs 20 angeordnet. Für die Verbindung mit einer Fluidversorgung weist die Vorrichtung 10 vorzugsweise integrierte Verbindungsmittel 19a auf, beispielsweise eine am Einlass 3a angeordnete Verbindungshülse als Schraub- oder Steckverbinder. Für die Verbindung mit dem Fluidzufuhranschluss 21 des Werkzeugs 20 weist die Vorrichtung 10 vorzugsweise integrierte Verbindungsmittel 19b auf, beispielsweise eine am Auslass 3b angeordnete Verbindungshülse, welche mittels eines entsprechend ausgebildeten Verbindungselements des Fluidzufuhranschlusses 21 fluiddicht verbindbar ist. Bei einer Aktivierung des Werkzeugs 20, insbesondere durch Drücken eines Einschalters 23 erfolgt eine Fluidförderung im Werkzeug 20 zu dessen Antrieb und somit eine Fluidförderung durch die Fluidversorgungsleitung und die dem Werkzeug 20 vorgeschaltete Zähleinheit 10.

Die untenstehend näher beschriebene Zähleinheit 10 weist vorzugsweise eine Kommunikationsschnittstelle 18 auf, welche ausgebildet ist vorzugsweise kabellos und bi-direktional mit einem Accesspoint 50 und/oder mit einer Rechner- oder Datenbankeinheit 40 des Systems 30 kommunizieren.

**Fig. 2a-2c** zeigen eine seitliche Schnittansicht einer bevorzugten Ausführungsform einer erfindungsgemäßen Zählvorrichtung 10 in verschiedenen Arbeitspositionen der Zählvorrichtung. Die Zähvorrichtung 10 weist ein Gehäuse 24 und eine darin positionssicher angeordnete Ventilhülse 1 mit einem Fluidkanal 2 und einem zugeordneten Einlass 3a und einem Auslass 3b zur Führung von Fluid bei Aktivierung des Werkzeugs 20 auf. Die Vorrichtung 10 weist weiterhin ein Display 25 auf, welches unter einer durchsichtigen Abdeckung 24a des Gehäuses 24 für einen Benutzer sichtbar angeordnet ist.

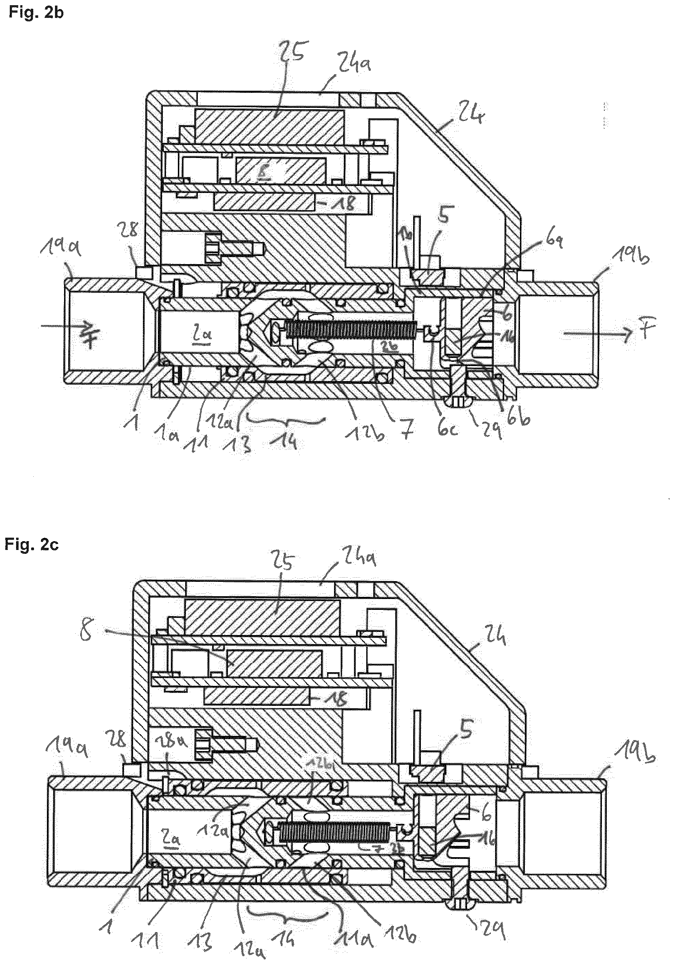

Die Ventilhülse 1 ist eine hohlzylindrische Hülse, in welcher sich der Fluidkanal 2 in Längsrichtung L erstreckt. Die Vorrichtung 10 umfasst weiterhin eine Zähleinheit 4 zur Erfassung einer Aktivierung des Werkzeugs 20 und aufweisend ein stationäres Sensorelement 5 sowie ein dazu beweglich angeordnetes Zählelement 6. Das Zählelement 6 ist in der Ventilhülse 1, insbesondere in einem Lagerabschnitt 1b der Ventilhülse 1 angeordnet bzw. bewegbar gelagert. Das Sensorelement 5 ist vorzugsweise ein Hall-Sensor, welcher ein dem Zählelement 6 zugeordnetes und vorzugsweise ferromagnetisches Sensorerfassungsobjekt 16 positionsabhängig erkennt. Das Zählelement 6 ist in der gezeigten Ausführungsform ein axial, d.h. entlang der Längsrichtung L des Fluidkanals 2, beweglicher Zählkolben, welcher in einer ersten Position (vgl. Fig. 2a) im Ventilgehäuse 1 mittels eines Spannelements 7, insbesondere einer Zugfeder, vorgespannt ist und ausgebildet, sich bei Führung von Fluid im Fluidkanal 2 bei Aktivierung des Werkzeugs 20 in eine zweite Position (vgl. Fig. 2b) axial zu bewegen.

Eine Außenumfangsfläche 6a des Zählkolbens 6 ist vorzugsweise auf eine Innenumfangsfläche des Lagerabschnitts 1b angepasst, derart, dass eine axiale Bewegung des Zählkolbens 6 im Lagerabschnitt 1b möglich ist. Der Zählkolben 6 weist vorzugsweise wenigstens eine darin ausgebildete Längsnut 6b auf, welche zur Führung von Fluid wenigstens in der zweiten, fluiddruckbeaufschlagten Position (vgl. Fig. 2b) ausgebildet ist und somit ein Durchströmen und/oder Umströmen des Zählkolbens 6 in der zweiten Position ermöglicht. In der ersten Position (vgl. Fig. 2a) kann die wenigstens eine Längsnut 6b von einem Durchmesserrücksprung 1c der Ventilhülse 1 fluiddichtend vom Fluidkanal 2 getrennt sein. Die Zähleinheit 4 kann zudem ein Positionssicherungs- oder Stellelement 29 aufweisen, welches ein ungewünschtes Verdrehen des Zählkolbens 6 in der Ventilhülse 1 verhindert. Diese kann beispielsweise in der Längsnut 6b geführt sein oder darin eingreifen.

Das Spannelement 7 ist an einem zentralen Befestigungselement, beispielsweise einer Befestigungsöse oder -haken 6c des Zählkolbens 6 befestigt. Ein gegenüberliegendes Ende des Spannelements 7 ist vorzugsweise zentral im Fluidkanal 2 an einem hierfür vorgesehenen Befestigungselement, vorzugsweise in einer zentralen Ausnehmung 14a eines Verteilabschnitt 14 der Ventilhülse 1 mit integrierten Befestigungsmitteln befestigt bzw. gehalten.

Der Verteilabschnitt 14 der Ventilhülse 1 ist ein vorzugsweise integral ausgebildeter Abschnitt der Ventilhülse 1 und weist wenigstens zwei, vorzugsweise eine Mehrzahl von darin über eine Mantelfläche 1a der Ventilhülse 1 geführte Fluidabschnitte 12a, 12b auf, welche jeweils einen zentralen Einlassfluidkanalabschnitt 2a mit einem zentralen Auslassfluidkanalabschnitt 2b des Fluidkanals 2 verbinden. Die Fluidabschnitte 12a, 12b sind vorzugsweise gleichmäßig umfangsverteilt in der Ventilhülse 1 bzw. im Verteilabschnitt 14 angeordnet. Die Fluidabschnitte 12a, 12b umfassen jeweils einen ersten, von dem Einlassfluidkanalabschnitt 2a zur Mantelfläche 1a der Ventilhülse 1 führenden, Fluidteilabschnitt 12a und einen zweiten, von der Mantelfläche 1a der Ventilhülse 1 in den Auslassfluidkanalabschnitt 2b führenden, Fluidteilabschnitt 12b.

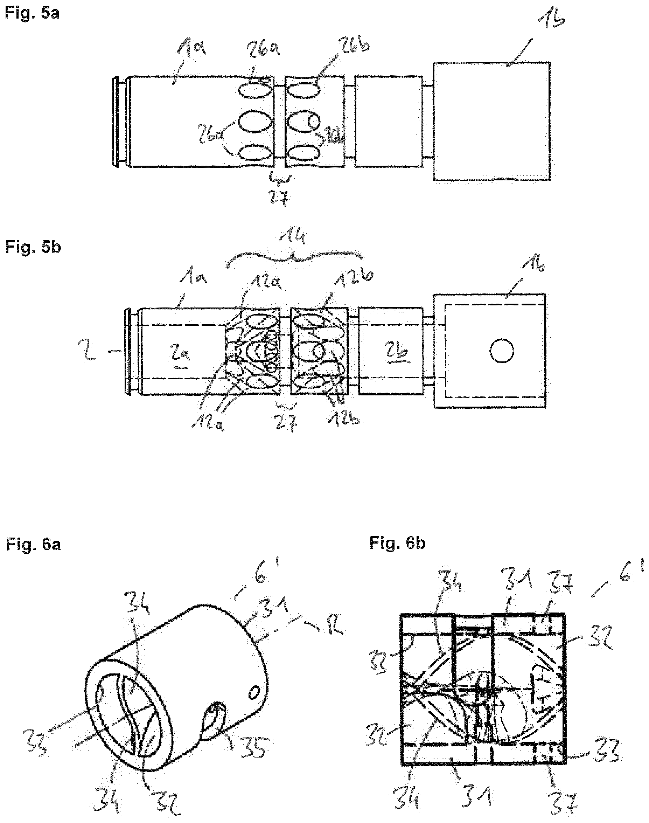

Die jeweiligen ersten Fluidteilabschnitte 12a verlaufen in Fluidflussrichtung vom zentralen Einlassfluidkanalabschnitt 2a radial nach außen geneigt hin zur Mantelfläche 1a, in welcher zugehörige Auslassöffnungen 26a ausgebildet sind (vgl. auch Fig. 5a,5b). Der jeweilige Fluidteilabschnitt 12b verläuft in Fluidflussrichtung von der Mantelfläche 1a, insbesondere von darin ausgebildeten Einlassöffnungen 26b radial nach innen geneigt hin zum zentral verlaufenden Auslassfluidkanalabschnitt 2b. Die in der Mantelfläche ausgebildeten Auslassöffnungen 26a und Einlassöffnungen 26b sind in Längserstreckungsrichtung L voneinander getrennt angeordnet. Hierbei weist die Ventilhülse 1 vorzugsweise einen die Öffnungen trennenden Mantelflächenabschnitt 27 auf. Dieser kann den gleichen Durchmesser oder einen gegenüber der restlichen Mantelfläche verringerten Durchmesser, wie in Fig. 5a,5b gezeigt, aufweisen.

Die Vorrichtung umfasst weiterhin eine relativ zur Ventilhülse 1 vorzugsweise axial bewegliche Absperreinheit 9, welche zum positionsabhängigen Zusammenwirken mit der Ventilhülse 1 ausgebildet ist, derart, dass in einer ersten fluidleitenden Offenstellung (vgl. Fig. 2a,b) eine Fluidförderung im Fluidkanal 2 ermöglicht und in einer zweiten fluidsperrenden Stellung (vgl. Fig. 2c) eine Fluidförderung im Fluidkanal 2 gesperrt wird. Die Absperreinheit 9 umfasst vorzugsweise einen axial verschiebbaren hohlzylindrischen Sperrschieber 11, welcher die Mantelfläche 1a der Ventilhülse 1 wenigstens teilweise und vorzugsweise vollständig umschließend ausgebildet ist und mit zur Mantelfläche 1a hin geöffneten Fluidabschnitten 12a,12b der Ventilhülse 1 positionsabhängig zusammenwirkt. Hierbei ist der Sperrschieber 11 vorzugsweise derart ausgebildet, dass in der ersten Offenstellung die Fluidabschnitte 12a, 12b der Ventilhülse 1 miteinander fluidleitend verbunden sind und in der zweiten Sperrstellung unterbrochen sind. Hierfür weist der Sperrschieber eine an der Innenmantelfläche 11a ausgebildete fluidleitende Ausnehmung 13 auf, welche in der ersten Offenstellung die Fluidabschnitte 12a,12b der Ventilhülse 1 miteinander verbindet. Diese ist vorzugsweise durch wenigstens eine radiale Erweiterung der Innenmantelfläche 11a in Längsrichtung L gebildet. Eine Längserstreckung der Ausnehmung 13 ist auf den Abstand der jeweiligen in der Mantelfläche angeordneten Ausnehmungen 26a,b der Fluidabschnitte 12a, 12b und somit auch zur Überbrückung des dazwischenliegenden Mantelflächenabschnitts 27 (vgl. Fig. 5a,5b) angepasst.

In der zweiten Sperrstellung der Absperreinheit (vgl. Fig. 2c) ist der Sperrschieber 11 axial relativ zur Ventilhülse 1 derart bewegt, dass die Fluidabschnitte 12a, 12b der Ventilhülse 1 durch die Innenmantelfläche 11a des Sperrschiebers 11 unterbrochen bzw. gesperrt sind. Hierbei verdeckt die Innenmantelfläche 11a die jeweiligen Öffnungen 26a,b in der Mantelfläche 1a der Ventilhülse 1. Ein Innendurchmesser des Sperrschiebers 11 ist hierbei auf den Außendurchmesser der Ventilhülse 1 angepasst. Zusätzlich kann eine Abdichtung mittels Dichtelementen wie beispielsweise O-Ringen vorgesehen sein.

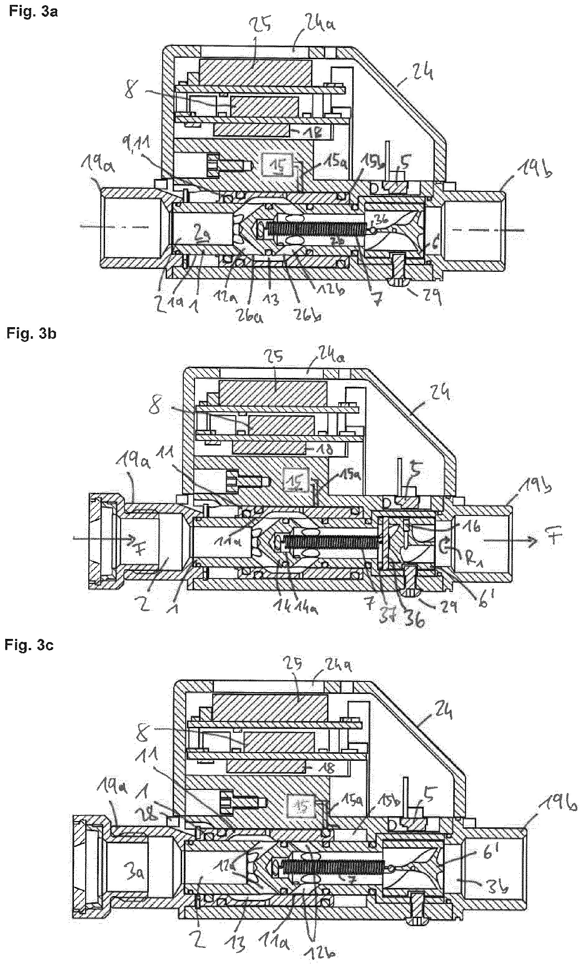

Zur Betätigung des Sperrschiebers 11, insbesondere gegen eine diesen in der jeweiligen Offenstellung oder Sperrstellung haltende Haftreibung, umfasst die Absperreinheit 9 ein vorzugsweise durch den Einlass 3a des Fluidkanals 2 gespeistes Ventil 15 (vgl. Fig. 3a-3c), vorzugsweise ein 3/2-Wegeventil, welches ausgebildet ist, bei Ansteuerung den Sperrschieber 11 der Absperreinheit 9 von der ersten Offenstellung in die zweite fluidsperrende Stellung bzw. Sperrstellung zu bewegen. Hierfür kommuniziert das Ventil 15 über eine schematisch gezeigte Fluidleitung 15a mit einem dem Sperrschieber 11 vorzugsweise einseitig zugeordneten und sich wenigstens teilweise um die Mantelfläche 1a der Ventilhülse 1 erstreckenden Druckraum 15b, wobei bei Einleitung von Fluid in den Druckraum 15b eine Verschiebung des Sperrschiebers 11 hin zur Sperrstellung erfolgt. Das Ventil kann weiterhin ausgebildet sein, bei entsprechender Ansteuerung den Sperrschieber 11 von der zweiten Sperrstellung in die erste Offenstellung zu bewegen. Dies kann durch eine zusätzliche, nicht dargestellte Fluidleitung erfolgen.
Die Absperreinheit 9 kann optional eine separate Öffnung bzw. einen Fluideinlass 28 im Gehäuse 24 aufweisen, welcher zur Einleitung von Fluid in einen Rückstellfluidkanal 28a und somit zur Druckbeaufschlagung des Sperrschiebers derart ausgebildet ist, dass dieser in seine Offenstellung zurückbewegt bzw. zurückgesetzt werden kann. Dies kann beispielsweise mit einer Druckluftpistole erfolgen. Alternativ oder zusätzlich kann die Absperreinheit 9 einen manuell bedienbaren Hebel (nicht dargestellt) aufweisen, welcher mit dem Sperrschieber 11 verbunden ist und eine manuelle Verschiebung bzw. Rücksetzung des Sperrschiebers 11 aus der Sperrstellung in die Offenstellung ermöglicht.

Die Vorrichtung 10 umfasst weiterhin eine Steuereinheit 8, welche mit der Zähleinheit 4 und der Sperreinheit 9 verbunden ist. Die Steuereinheit 8 ist zur Überwachung der Zähleinheit und zur selektiven Ansteuerung der Absperreinheit 9 ausgebildet. Die Steuereinheit 8 umfasst dabei vorzugsweise wenigstens eine Rechnereinheit, einen internen, vorzugsweise nicht-flüchtigen Speicher, und kann als Steuerplatine ausgebildet sein. Die Vorrichtung umfasst zudem wenigstens eine interne Stromversorgung (nicht gezeigt).

Die Steuereinheit 8 ist ausgebildet, das mit der Vorrichtung verbundene Werkzeug 20 durch Auswertung der Signale der Zähleinheit 6 zu überwachen, insbesondere hinsichtlich einer vordefinierten maximalen Zykluszahl und/oder Aktivierungsdauer des Werkzeugs. Bei Erreichen einer vordefinierten maximalen Zykluszahl und/oder einer vordefinierten maximalen bzw. kumulierten Betriebsdauer für das mit der Zähleinheit verbundene Werkzeug 20 wird die Absperreinheit 9 durch die Steuereinheit 8 zur Bewegung in die Sperrstellung angesteuert. Die Zähleinheit 4 ist in der dargestellten Ausführungsform derart ausgebildet, dass das Sensorerfassungsobjekt 16 in der ersten, vorgespannten und nicht fluiddruckbeaufschlagten ersten Position (vgl. Fig. 2a) des Zählkolbens 6, d.h. im nichtaktiviertem Zustand des Werkzeugs 20, innerhalb eines Detektions- bzw. Erfassungsbereichs des Sensorelements bzw. Hallsensor 5 angeordnet ist. Bei Aktivierung des Werkzeugs 20 und somit bei Fluiddruckbeaufschlagung des Zählkolbens 6 durch einen Fluidfluss F im Fluidkanal 2 verschiebt sich der Zählkolben 6 in die zweite Position (vgl. Fig. 2b) axial derart, dass das Sensorerfassungsobjekt 16 außerhalb eines Detektions- bzw. Erfassungsbereichs des Sensorelements 5 angeordnet ist. Dies wird durch die mit der Zähleinheit 4 verbundene Steuereinheit 8 erfasst, ebenso wie die Zeitspanne, über welche das Sensorelement 5 das Sensorerfassungsobjekt 16 in der zweiten Position nicht detektiert. In einer nicht gezeigten alternativen Ausführungsform ist das Sensorerfassungsobjekt 16 derart an dem Zählelement 6 angeordnet, dass dieses in der ersten vorgespannten Position des Zählelements 6 durch das Sensorelement 5 nicht detektierbar ist und in der zweiten fluidbeaufschlagten Position des Zählelements 6 detektierbar ist.

Bei Erreichung einer vordefinierten Zykluszahl und/oder Aktivierungsdauer bzw. Betriebsdauer steuert die Steuereinheit 8 die Absperreinheit 9 zur Bewegung in die Sperrstellung, wie in Fig. 2c gezeigt, an.

**Fig. 3a-3c** zeigen eine weitere bevorzugte Ausführungsform der erfindungsgemäßen Vorrichtung 10, welche einen rotierbaren Drehschalter 6' als Zählelement der Zähleinheit 4 aufweist. Die weiteren Komponenten der Vorrichtung entsprechen der Ausführungsform gemäß Fig. 2a-2c. Der Drehschalter 6' (vgl. Fig. 6a,6b) umfasst einen Hohlzylinder 31, welcher um eine Rotationsachse R rotierbar im Lagerabschnitt 1b der Ventilhülse 1 gelagert ist und wenigstens einen dadurch verlaufenden fluidführenden Kanal 32 aufweist. An einer Innenumfangsfläche 33 ist wenigstens ein Umlenkelement 34 angeordnet, vorzugsweise eine Schaufelradausbildung bzw. - geometrie, welches bei Fluidführung F durch den Fluidkanal 2 eine bereitgestellte axiale Druckbeaufschlagung wenigstens teilweise in eine Rotationsbewegung R₁ und insbesondere in eine vorgegebene Rotationsrichtung des Drehschalters umsetzt bzw. eine derartige Rotationsbewegung R₁ bewirkt.

Der Drehschalter 6' weist eine teilweise um den Umfang verlaufende Nut 35 in dessen Mantelfläche auf, welche mit einem in der Ventilhülse 1 angeordneten und in den Lagerabschnitt 1b hineinragenden Stellelement 29 zusammenwirkt, derart, dass der Drehschalter 6' nur um einen vordefinierten Winkel drehbar ist. Hierdurch wird eine Drehung des Drehschalters bei Fluiddruckbeaufschlagung durch Fluidführung F im Fluidkanal 2 auf einen vordefinierten Winkel in Rotationsrichtung R₁ begrenzt bzw. definiert.

Das dem Drehschalter 6' zugeordnete Spannelement 7 ist vorzugsweise an einem zentralen Befestigungselement 36 des Drehschalters 6' angeordnet. Dieses kann beispielsweise ein Zylinderstift sein, welcher in dafür vorgesehenen Lagerbohrungen 37 im Hohlzylinder 31 angeordnet ist. Das gegenüberliegende Ende des Spannelements ist analog zur Ausführungsform gemäß Fig. 2a-c in einem zentralen Befestigungselement der Ventilhülse 1 gehalten. Zur Bereitstellung einer Vorspannung des Drehschalters 6' ist das Spannelement 7 um seine Längsachse rotiert angeordnet. Hierdurch wird eine auf den Drehschalter 6' in Rotationsrichtung wirkende Vorspannung bereitgestellt.

Ein dem Drehschalter 6' zugeordnetes Sensorerfassungsobjekt 16 ist derart angeordnet, dass es lediglich in einer Rotationsposition erfasst bzw. detektiert wird. In der dargestellten Ausführungsform ist das Sensorerfassungsobjekt 16 in der ersten, vorgespannten und nicht fluiddruckbeaufschlagten ersten Position (vgl. Fig. 3a) des Drehschalters 6', d.h. im nichtaktiviertem Zustand des Werkzeugs 20, außerhalb eines Detektions- bzw. Erfassungsbereichs des Sensorelements bzw. Hallsensors 5 angeordnet. Bei Aktivierung des Werkzeugs 20 und somit bei Fluiddruckbeaufschlagung des Drehschalters 6' durch einen Fluidfluss F im Fluidkanal 2 rotiert der Drehschalter koaxial zum Fluidkanal 2 in die zweite Position (vgl. Fig. 3b) derart, dass das Sensorerfassungsobjekt 16 innerhalb eines Detektions- bzw. Erfassungsbereichs des Sensorelements 5 angeordnet ist. In einer nicht gezeigten alternativen Ausführungsform ist das Sensorerfassungsobjekt 16 derart am Drehschalter 6' angeordnet, dass dieses in der ersten vorgespannten Position durch das Sensorelement 5 detektierbar ist und in der zweiten fluidbeaufschlagten Position nicht detektierbar ist.

Bei Erreichung einer vordefinierten Zykluszahl und/oder Aktivierungsdauer bzw. Betriebsdauer steuert die Steuereinheit 8 die Absperreinheit 9 zur Bewegung in die Sperrstellung, wie in Fig. 3c gezeigt, an.

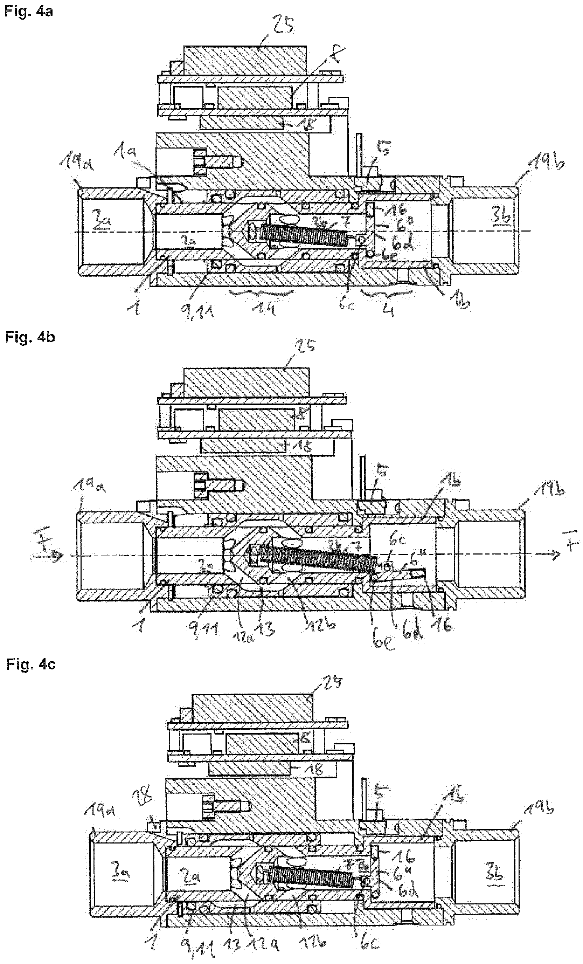

**Fig. 4a-4c** zeigen eine weitere bevorzugte Ausführungsform der erfindungsgemäßen Vorrichtung 10, welche einen kippbaren Klappschalter 6" aufweist. Die weiteren Komponenten der Vorrichtung entsprechen der Ausführungsform gemäß Fig. 2a-2c.

Der Klappschalter 6"umfasst eine Klappe 6d, welche um eine senkrecht zur Längsrichtung L des Fluidkanals angeordnete Drehachse 6e kipp- bzw. klappbar ist. Der Klappschalter 6" schließt in der ersten vorgespannten Position vorzugsweise den Fluidkanal oder stellt durch die im Wesentlichen senkrechte Ausrichtung der Klappe 6d zum Fluidkanal einen deutlichen Widerstand gegen Fluidfluss dar, wobei bei Aktivierung des Werkzeugs eine Druckbeaufschlagung auf die Klappe 6d erfolgt, welche diese entgegen der angelegten Vorspannkraft in die zweite Position bewegt bzw. aufklappt.

Die Zähleinheit 4 ist in der dargestellten Ausführungsform derart ausgebildet, dass das Sensorerfassungsobjekt 16 in der ersten, vorgespannten und nicht fluiddruckbeaufschlagten ersten Position (vgl. Fig. 4a) des Klappschalters 6", d.h. im nichtaktiviertem Zustand des Werkzeugs 20, innerhalb eines Detektions- bzw. Erfassungsbereichs des Sensorelements bzw. Hallsensor 5 angeordnet ist. Bei Aktivierung des Werkzeugs 20 und somit bei Fluiddruckbeaufschlagung des Klappschalters 6" durch einen Fluidfluss F im Fluidkanal 2 dreht bzw. schwenkt die Klappe 6d um die Drehachse 6e in die zweite Position (vgl. Fig. 4b) derart, dass das Sensorerfassungsobjekt 16 außerhalb eines Detektions- bzw. Erfassungsbereichs des Sensorelements 5 angeordnet ist. Dies wird durch die mit der Zähleinheit 4 verbundene Steuereinheit 8 erfasst, ebenso wie die Zeitspanne, über welche das Sensorelement 5 das Sensorerfassungsobjekt 16 in der zweiten Position nicht detektiert. In einer nicht gezeigten alternativen Ausführungsform ist das Sensorerfassungsobjekt 16 derart an dem Zählelement 6" angeordnet, dass dieses in der ersten vorgespannten Position des Zählelements 6" durch das Sensorelement 5 nicht detektierbar ist und in der zweiten fluidbeaufschlagten Position des Zählelements 6 detektierbar ist.

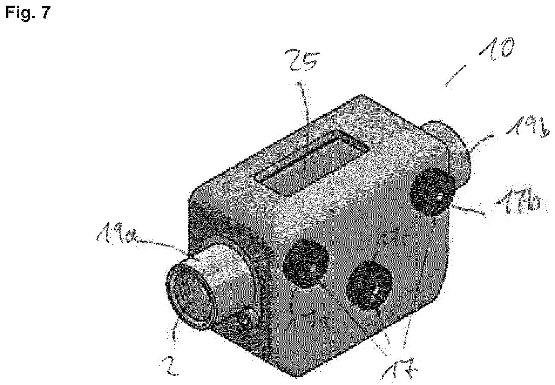

**Fig. 7** zeigt eine perspektivische Seitenansicht der erfindungsgemäßen Zählvorrichtung 10. Diese weist vorteilhafterweise ein an dem Gehäuse 24 angeordnete oder integrierte Ortungseinheit 17 auf, welche zum Zusammenwirken mit einem externen Ortungssystem zur Positions- und/oder Lageerfassung der Vorrichtung 10 und des damit verbundenen Werkzeugs 20 ausgebildet ist.

Die Ortungseinheit 17 kann beispielsweise drei in einem vordefinierten Muster angeordnete Markerelemente 17a,17b,17c aufweisen, welche durch beispielsweise ein externes optisches System erkannt werden und eine Positions- und/oder Lageerfassung der Vorrichtung 10 und somit des Werkzeugs 20 in einem vorgegebenen Koordinatensystem ermöglichen. Die Ortungseinheit 17 ist vorzugsweise mit der Steuereinheit 8 verbunden, welche ausgebildet sein kann, in Abhängigkeit einer erfassten Position und/oder Lage die Absperreinheit 9 zur Einnahme ihrer Offenstellung oder Sperrstellung anzusteuern. Entsprechende positions- und/oder lagebasierte Daten zu und/oder von einem zugehörigen externen Ortungssystem und/oder einer Rechner- oder Datenbankeinheit 30 (vgl. Fig. 1) können direkt über eine entsprechende Kommunikationsschnittstelle der Ortungseinheit 17 oder durch die Kommunikationsschnittstelle 18 der Vorrichtung 10 übertragen werden.

Durch die Bereitstellung der Ortungseinheit 17 können verschiedene Funktionen und Handhabungen des Werkzeugs 20 überwacht und/oder gesteuert werden. Insbesondere kann durch die Positions- und/oder Lageerfassung festgelegt werden, wo sich das Werkzeug 20 im Raum befindet und je nach Position kann der Start der Maschine durch entsprechende Ansteuerung der Absperreinheit 9 durch die Steuereinheit 8 freigegeben oder gesperrt werden. Hierdurch können insbesondere aufwendigere bzw. umständlichere Lagekodiersysteme wie z.B. Bohrschablonen vermieden werden.

Die oben beschriebenen Ausführungsformen sind lediglich beispielhaft, wobei die Erfindung keineswegs auf die in den Figuren gezeigten Ausführungsformen beschränkt ist.

### Bezugszeichenliste

- 1: Ventilhülse
- 1a: Mantelfläche Ventilhülse
- 1b: Lagerabschnitt
- 1c: Durchmesserrücksprung
- 2: Fluidkanal
- 2a: Einlassfluidabschnitt
- 2b: Auslassfluidabschnitt
- 3a: Einlass
- 3b: Auslass
- 4: Zähleinheit
- 5: Sensorelement
- 6,6',6": Zählelement
- 6a: Außenumfangsfläche
- 6b: Längsnut
- 6c: Befestigungsöse
- 6d: Klappe
- 6e: Drehachse
- 7: Spannelement
- 8: Steuereinheit
- 9: Absperreinheit
- 10: Zählvorrichtung
- 11: Sperrschieber
- 11a: Innenmantelfläche
- 12a,b: Fluidabschnitte
- 13: fluidleitende Ausnehmung
- 14: Verteilabschnitt Ventilhülse
- 14a: Ausnehmung
- 15: Ventil
- 15a: Ventilfluidleitung
- 15b: Druckraum
- 16: Sensorerfassungsobjekt
- 17: 3D Ortungseinheit
- 18: Kommunikationsschnittstelle
- 19a,b: Verbindungselemente
- 20: Werkzeug
- 21: Fluidzufuhranschluss
- 22: Griff
- 23: Aktuator
- 24: Gehäuse
- 25: Display
- 26a,b: Öffnungen
- 27: Mantelflächenabschnitt
- 28: Öffnung
- 28a: Rückstellfluidkanal
- 29: Stellelement
- 30: System
- 31: Hohlzylinder
- 32: Kanal
- 33: Innenumfangsfläche
- 34: Umlenkelement
- 35: Nut
- 36: Zylinderelement
- 37: Bohrungen

- 40: Rechnereinheit
- 50: Accesspoint

- L: Längserstreckungsrichtung Fluidkanal
- F: Fluidfluss
- R: Rotationsachse
- R₁: Rotationsbewegung

## Patentansprüche

1. Zählvorrichtung (10) für ein fluidbetriebenes Werkzeug (20), aufweisend eine Ventilhülse (1) mit einem darin angeordneten Fluidkanal (2) mit einem Einlass (3a) und einem Auslass (3b) zur Führung von Fluid bei Aktivierung des Werkzeugs (20),
eine Zähleinheit (4) zur Erfassung einer Aktivierung des Werkzeugs (20) mit einem stationären Sensorelement (5) und einem mit diesem positionsabhängig und vorzugsweise magnetisch zusammenwirkenden und in der Ventilhülse (1) relativ zum Sensorelement (5) bewegbar angeordneten Zählelement (6), wobei das Zählelement (6) in einer ersten Position im Ventilgehäuse (1) mittels eines Spannelements (7) vorgespannt ist und ausgebildet ist, sich bei Führung von Fluid im Fluidkanal (2) bei Aktivierung des Werkzeugs (20) in eine zweite Position zu bewegen,
eine Steuereinheit (8) zur Überwachung der Zähleinheit (4) insbesondere hinsichtlich einer vordefinierten maximalen Zykluszahl und/oder Aktivierungsdauer des Werkzeugs,
**dadurch gekennzeichnet, dass**
die Zählvorrichtung (10) eine relativ zur Ventilhülse (1) vorzugsweise axial bewegliche und durch die Steuereinheit (8) ansteuerbare Absperreinheit (9) aufweist, welche zum positionsabhängigen Zusammenwirken mit der Ventilhülse (1) ausgebildet ist, derart, dass in einer ersten fluidleitenden Offenstellung eine Fluidförderung im Fluidkanal (2) ermöglicht und in einer zweiten fluidsperrenden Stellung eine Fluidförderung im Fluidkanal (2) gesperrt wird.

2. Vorrichtung nach Anspruch 1,
**dadurch gekennzeichnet, dass** die Absperreinheit (9) einen axial verschiebbaren hohlzylindrischen Sperrschieber (11) aufweist, welcher eine Mantelfläche (1a) der Ventilhülse (1) wenigstens teilweise umschließend ausgebildet ist und mit zur Mantelfläche (1a) hin geöffneten Fluidabschnitten (12a,12b) der Ventilhülse (1) zusammenwirkend ausgebildet ist, derart, dass in der ersten Offenstellung die Fluidabschnitte (12a,12b) der Ventilhülse (1) miteinander fluidleitend verbunden sind und in der zweiten Sperrstellung unterbrochen sind.

3. Vorrichtung nach Anspruch 2,
**dadurch gekennzeichnet, dass** der Sperrschieber (11) auf einer Innenmantelfläche (11a) wenigstens eine fluidleitende Ausnehmung (13) aufweist, welche in der ersten Offenstellung die Fluidabschnitte (12a,12b) der Ventilhülse (1) miteinander verbindet, und dass die Innenmantelfläche (11a) ausgebildet ist, in der zweiten Sperrstellung die Fluidabschnitte (12a,12b) der Ventilhülse (1) zu unterbrechen.

4. Vorrichtung nach einem der vorhergehenden Ansprüche,
**dadurch gekennzeichnet, dass** die Ventilhülse (1) einen zwischen dem Einlass (3a) und Auslass (3b) im Fluidkanal (2) angeordnete stationären Verteilabschnitt (14) mit wenigstens zwei, vorzugsweise einer Mehrzahl von darin über eine Mantelfläche (1a) geführten Fluidabschnitten (12a,12b) aufweist, welche jeweils einen vorzugsweise zentralen Einlassfluidkanalabschnitt (2a) mit einem vorzugsweise zentralen Auslassfluidkanalabschnitt (2b) des Fluidkanals (2) verbinden.

5. Vorrichtung nach einem der Ansprüche 2 bis 4,
**dadurch gekennzeichnet, dass** die Fluidabschnitte (12a, 12b) der Ventilhülse (1) jeweils einen ersten von einem Einlassfluidkanalabschnitt (2a) zur Mantelfläche (1a) der Ventilhülse (1) führenden Fluidteilabschnitt (12a) und einen zweiten, von der Mantelfläche (1a) der Ventilhülse (1) in einen Auslassfluidkanalabschnitt (2b) führenden Fluidteilabschnitt (12b) aufweisen.

6. Vorrichtung nach einem der vorhergehenden Ansprüche, **dadurch gekennzeichnet, dass** die Ventilhülse (1) wenigstens zwei über die Mantelfläche (1a) geführte Fluidabschnitte (12a,12b), bevorzugt eine Vielzahl von über die Mantelfläche (1a) geführten Fluidabschnitten (12a,12b) aufweist, welche gleichmäßig umfangsverteit in der Ventilhülse (1), insbesondere in einem im Fluidkanal (2) angeordneten Verteilabschnitt (14) der Ventilhülse (1), angeordnet sind.

7. Vorrichtung nach einem der vorhergehenden Ansprüche, **dadurch gekennzeichnet, dass** die Absperreinheit (9) ein vorzugsweise durch den Einlass (3a) mit Fluid gespeistes und mit der Steuereinheit (8) verbundenes Ventil (15), vorzugsweise ein 3/2-Wegeventil, umfasst, welches ausgebildet ist, bei Ansteuerung durch die Steuereinheit (8) einen Sperrschieber (11) der Absperreinheit (9) von der ersten Offenstellung in die zweite fluidsperrende Stellung zu bewegen.

8. Vorrichtung nach einem der vorhergehenden Ansprüche, **dadurch gekennzeichnet, dass** das Zählelement (6) einen Zählkolben umfasst, welcher in Längsrichtung (L) des Fluidkanals (2) axial beweglich in der Ventilhülse (1) gelagert ist.

9. Vorrichtung nach einem der vorhergehenden Ansprüche, **dadurch gekennzeichnet, dass** das Zählelement (6) einen vorzugsweise koaxial zur Längsrichtung (L) des Fluidkanals (2) drehbaren Drehschalter umfasst, welcher in der Ventilhülse (1) rotierbar gelagert ist.

10. Vorrichtung nach einem der vorhergehenden Ansprüche, **dadurch gekennzeichnet, dass** dem Zählelement (6) ein magnetisch detektierbares Sensorerfassungsobjekt (16) zugeordnet ist, welches mit dem stationären Sensorelement (5) der Zähleinheit (4) wenigstens in einer Position des Zählelements (6) zusammenwirkt.

11. Vorrichtung nach Anspruch 10, **dadurch gekennzeichnet, dass** das Sensorerfassungsobjekt (16) derart angeordnet ist, dass dieses in der ersten Position des Zählelements (6) durch das Sensorelement (5) detektierbar ist und in der zweiten Position des Zählelements (6) nicht detektierbar ist.

12. Vorrichtung nach einem der vorhergehenden Ansprüche, **dadurch gekennzeichnet, dass** die Steuereinheit (8) derart ausgebildet ist, dass sie eine Nutzung des Werkzeugs (20) auf Basis der durch die Zähleinheit (4) erfassten kumulierten Zykluszahl und/oder der kumulierten Aktivierungsdauer des Werkzeugs (20) bestimmt und bei Erreichung eines jeweils vordefinierten Maximalwerts die Absperreinheit (9) aktiviert, wobei die Steuereinheit (8) vorzugsweise weiterhin derart ausgebildet ist, dass sie eine Aktivierung des Werkzeugs (20) bis zu einem minimalen Schwellenwert, vorzugsweise weniger als 2 Sekunden, nicht für die Bestimmung der Werkzeugnutzung (20) berücksichtigt.

13. Vorrichtung nach einem der vorhergehenden Ansprüche, **dadurch gekennzeichnet, dass** die Zählvorrichtung (10) eine Ortungseinheit (17) aufweist, welche zum Zusammenwirken mit einem externen Ortungssystem zur Positions- und/oder Lageerfassung des Werkzeugs (20) ausgebildet ist und wobei die Steuereinheit (8) ausgebildet ist, in Abhängigkeit einer erfassten Position und/oder Lage die Absperreinheit (9) zur Einnahme ihrer Offenstellung oder Sperrstellung anzusteuern.

14. Fluidbetriebenes insbesondere pneumatisches oder hydraulisches Werkzeug (20) aufweisend eine Vorrichtung nach einem der Ansprüche 1 bis 13.

15. Verwendung der Zählvorrichtung (10) nach einem der Ansprüche 1 bis 13 zur Überwachung eines fluidbetriebenen Werkzeugs (20) und selektiven Sperrung oder Freigabe einer Fluidzufuhr zum Werkzeug.
